# EUROPEAN PATENT APPLICATION

(11) **EP 4 116 360 A1**
(43) Date of publication of application: **11.01.2023**
(21) Application number: 21763540.8
(22) Date of filing: 04.03.2021
(51) Int. Cl.: C08J 5/18, B29B 13/10, B29C 43/02, B29L 7/00

(54) **LIQUID CRYSTAL POLYMER FILM AND METHOD FOR PRODUCING SAME**

(30) Priority: 06.03.2020 JP 2020038696
(71) Applicant: Murata Manufacturing Co., Ltd., Nagaokakyo-shi, Kyoto 617-8555 (JP)
(72) Inventor: OHATA, Hiroyuki, Nagaokakyo-shi, Kyoto 617-8555 (JP); MAKINO, Narimichi, Nagaokakyo-shi, Kyoto 617-8555 (JP)
(74) Representative: Reeve, Nicholas Edward
(86) International application number: PCT/JP2021/008426
(87) International publication number: WO 2021/177402

(57) **Abstract**

A liquid crystal polymer film includes a liquid crystal polymer and, as a raw material, a liquid crystal polymer molded product whose endothermic peak temperature exceeds 330°C when heated to 400°C in an inert atmosphere, then cooled to normal temperature at a temperature decreasing rate of 40°C/min or more, and measured using a differential scanning calorimeter while being heated again at a temperature increasing rate of 40°C/min.

## Description

### TECHNICAL FIELD

The present invention relates to a liquid crystal polymer film and a method of producing the liquid crystal polymer film.

### BACKGROUND ART

As a document disclosing a liquid crystal polymer film, Japanese Patent Application Laid-Open (Translation of PCT Application) No. 3-504948 (Patent Document 1) is known. Patent Document 1 describes a multiaxially oriented film prepared as a liquid crystal polymer film from a liquid crystal polymer. In the first processing step of a method of preparing a multiaxially oriented film, a polymer resin melts, and this melt is extruded and sent to the next phase of the process. It is described that as a multiaxially oriented film, for example, a VECTRA (registered trademark) film has characteristics suitable for the electronic field such as a printed wiring board.

### PRIOR ART DOCUMENT

### PATENT DOCUMENT

Patent Document 1: Japanese Patent Application Laid-Open (Translation of PCT Application) No. 3-504948

### SUMMARY OF THE INVENTION

### Problem to be solved by the invention

The liquid crystal polymer film described in Patent Document 1 is molded by a melt extrusion method. In the melt extrusion method, the temperature of a thermotropic liquid crystal polymer is raised to the melting point or higher, and the polymer is extruded.

Some liquid crystal polymers have a high melting point close to the decomposition temperature of the liquid crystal polymer. If an attempt is made to mold a liquid crystal polymer film using such a liquid crystal polymer as a raw material by the melt extrusion method, since the melting point is close to the decomposition temperature, it is necessary to raise the temperature of the liquid crystal polymer to close to the decomposition temperature. However, when an attempt is made to push out the polymer resin in the state where the temperature is raised to close to the decomposition temperature, the polymer resin is gelled to form fish eyes or the like, and the polymer resin is deteriorated, so that the polymer resin cannot be substantially molded into a film shape.

Due to the above circumstances, a polymer resin having a melting point sufficiently lower than the decomposition temperature is employed as a raw material used when a conventional liquid crystal polymer film is prepared. A conventional liquid crystal polymer film prepared from such a polymer resin has low heat resistance.

For example, when the conventional liquid crystal polymer film is used as a circuit board, the circuit board cannot withstand heating when the circuit board is repaired using a soldering iron, and the circuit board may be damaged.

When a liquid crystal polymer film as a circuit board material is molded by the melt extrusion method, a main alignment direction of each molecule constituting the liquid crystal polymer is different between a pair of surface layers located on surfaces on both sides in a thickness direction of the film and an inner layer located between the pair of surface layers. Thus, between the pair of surface layers and the inner layer, for example, there is a difference in thermal expansion coefficient in one of in-plane directions of the film. When such a liquid crystal polymer film is used as a circuit board, the circuit board may be warped or deformed to undulate by heat from the outside.

The present invention has been made in view of the above problems, and an object thereof is to obtain a liquid crystal polymer film having improved heat resistance.

### Means for solving the problem

A liquid crystal polymer film according to a first aspect of the present invention includes a liquid crystal polymer and contains, as a raw material, a liquid crystal polymer molded product whose endothermic peak temperature exceeds 330°C when heated to 400°C in an inert atmosphere, then cooled to normal temperature at a temperature decreasing rate of 40°C/min or more, and measured using a differential scanning calorimeter while being heated again at a temperature increasing rate of 40°C/min

A liquid crystal polymer film according to a second aspect of the present invention is a liquid crystal film, and includes a pair of surface layers and an inner layer. The pair of surface layers is located on each of a surface on one side and a surface on the other side in a thickness direction. The inner layer is located between the pair of surface layers. A main alignment direction of molecules constituting the liquid crystal polymer contained in the pair of surface layers extends along the main alignment direction of molecules constituting the liquid crystal polymer contained in the inner layer.

### Advantageous effect of the invention

According to the present invention, heat resistance of the liquid crystal polymer film can be improved.

### BRIEF EXPLANATION OF DRAWINGS

FIG. 1 is a photograph of a liquid crystal polymer powder in Example 1.
FIG. 2 is a photograph of a surface of a liquid crystal polymer fiber mat in Example 1.

### MODE FOR CARRYING OUT THE INVENTION

### <Liquid crystal polymer film>

Hereinafter, a liquid crystal polymer film according to an embodiment of the present invention will be described. The liquid crystal polymer film according to an embodiment of the present invention includes a liquid crystal polymer.

The liquid crystal polymer is specifically a thermotropic liquid crystal polymer. The material of the liquid crystal polymer is parahydroxybenzoic acid, 2,6-hydroxynaphthoic acid, hydroquinone, 4,4-dihydroxybiphenyl, 2,6-naphthalenedicarboxylic acid, terephthalic acid, or a block copolymer with isophthalic acid. A molecule of the liquid crystal polymer has a negative thermal expansion coefficient in an axial direction of a molecular axis and a positive thermal expansion coefficient in a radial direction of the molecular axis. The liquid crystal polymer according to the present embodiment does not have an amide bond.

In the liquid crystal polymer contained in the liquid crystal polymer film according to an embodiment of the present invention, an endothermic peak temperature exceeds 330°C when the liquid crystal polymer is heated to 400°C in an inert atmosphere, then cooled to normal temperature at a temperature decreasing rate of 40°C/min or more, and measured using a differential scanning calorimeter while being heated again at a temperature increasing rate of 40°C/min. Since the endothermic peak temperature exceeds 330°C, heat resistance of the liquid crystal polymer film is improved. As a result, when the liquid crystal polymer film is used as a circuit board, it is possible to prevent the circuit board from being damaged by repair using a soldering iron. The liquid crystal polymer film according to an embodiment of the present invention is preferably composed of, as a raw material, a liquid crystal polymer molded product having the endothermic peak temperature exceeding 330 °C. For example, in the case of a combination of monomers of parahydroxybenzoic acid and 4,6-hydroxynaphthoic acid, when 4,6-hydroxyhathoic acid is 75% by mass or more or 18% by mass or less, a melting point of the liquid crystal polymer exceeds 330°C. However, the combination of monomers is not limited thereto. In the present embodiment, the endothermic peak temperature of the liquid crystal polymer contained in the liquid crystal polymer film is, for example, 400°C or less. In the present embodiment, the endothermic peak temperature of the liquid crystal polymer molded product as the raw material is preferably 400°C or less. The endothermic peak temperature in the present embodiment is preferably lower than a decomposition temperature of the liquid crystal polymer from the viewpoint of molding the liquid crystal polymer film. In the present specification, the endothermic peak temperature measured as described above may be simply referred to as a "melting point".

A thickness of the liquid crystal polymer film according to the present embodiment is preferably, for example, 5 µm or more and 250 µm or less.

In the liquid crystal polymer film according to the present embodiment, when a test film having a width of 10 mm and a thickness of 25 µm and collected from the liquid crystal polymer film is subjected to an MIT folding endurance fatigue test under the conditions of a load of 500 g, a curvature radius of 0.2 mm, a bending angle of 135 degrees, and a speed of 175 cpm, the number of times of bending required for cutting the test film is preferably 100 times or more. As described above, when the liquid crystal polymer film requires 100 times or more for cutting by the folding endurance fatigue test, the liquid crystal polymer film can be suitably used for a substrate for a substrate for FPC (Flexible Printed Circuit), a diaphragm, an organic semiconductor substrate, an organic EL substrate, or a damping plate as a circuit board. That is, the liquid crystal polymer film according to the present embodiment is preferably not only excellent in heat resistance but also excellent in folding resistance from the viewpoint of being applicable to the above-described substrate and the like.

The liquid crystal polymer film according to the present embodiment preferably has a water absorption rate of 0.2% by mass or less when immersed in water at normal temperature for 24 hours. As described above, when the water absorption rate is 0.2% by mass or less, the liquid crystal polymer film can be more suitably used as a circuit board member for high frequency. When the liquid crystal polymer film having a water absorption rate of 0.2% by mass or less is used as a circuit board member for high frequency, it is possible to suppress inclusion of water having an extremely high dielectric constant in a circuit board for high frequency, to suppress an increase in dielectric loss accompanying an increase in relative permittivity and dielectric loss tangent, and to suppress mismatch in characteristic impedance due to variation in dielectric constant and occurrence of transmission loss accompanying the mismatch. For example, a liquid crystal polymer film formed of a liquid crystal polymer in which an amine-derived structure is introduced into a molecular structure has a water absorption rate of more than 0.2% by mass because of relatively high water absorbency.

The liquid crystal polymer film according to the present embodiment includes a pair of surface layers and an inner layer. The pair of surface layers is located on each of a surface on one side and a surface on the other side in a thickness direction of the liquid crystal polymer film. The inner layer is located between a pair of surfaces. A main alignment direction of each molecule constituting the liquid crystal polymer contained in the pair of surface layers extends along the main alignment direction of each molecule constituting the liquid crystal polymer contained in the inner layer. The main alignment direction of each molecule constituting the liquid crystal polymer contained in the pair of surface layers and the main alignment direction of each molecule constituting the liquid crystal polymer contained in the inner layer extend along an in-plane direction of the surface of the liquid crystal polymer film. Thus, the liquid crystal polymer film according to the present embodiment does not substantially have a boundary surface between each of the pair of surface layers and the inner layer.

In the liquid crystal polymer film according to the present embodiment, a copper foil may be bonded to at least one surface, or copper foils may be bonded to both surfaces. Thus, the liquid crystal polymer film according to the present embodiment can be used as one laminated molded product, for example, as FCCL (FlexibleCopper Clad Laminates) capable of forming a circuit by a subtract method.

### <Method of producing liquid crystal polymer film>

Hereinafter, a method of producing a liquid crystal film according to an embodiment of the present invention will be described. A method of producing a liquid crystal polymer film according to an embodiment of the present invention includes, as pre-steps, a coarsely grinding step, a finely grinding step, a coarse particle removal step, and a fiberizing step in this order, and further includes, after the pre-step, a dispersion step, a matting step, a heat-pressing step, and a metal foil removal step as post-steps.

### <Pre-step>

First, the pre-step will be described. In the coarsely grinding step which is the first step of the pre-step, first, a molded product of a liquid crystal polymer is provided as a raw material. Examples of the molded product of the liquid crystal polymer include pelletized liquid crystal polymer uniaxially oriented, a film-shaped liquid crystal polymer biaxially oriented, and a powder-shaped liquid crystal polymer. As the molded product of the liquid crystal polymer, a pelletized or powdery liquid crystal polymer more inexpensive than the film-shaped liquid crystal polymer is preferable, and the pelletized liquid crystal polymer is more preferable from the viewpoint of production cost. In the present embodiment, the molded product of the liquid crystal polymer does not contain a liquid crystal polymer directly molded into a fibrous shape by an electrolytic spinning method, a melt blowing method, or the like. However, the molded product of the liquid crystal polymer may contain a liquid crystal polymer processed into a fibrous form by crushing a pelletized liquid crystal polymer or a powdery liquid crystal polymer.

The melting point of the molded product of the liquid crystal polymer is preferably higher than 330°C, and more preferably 350°C or higher. Thus, a liquid crystal polymer film containing a liquid crystal polymer having a melting point of higher than 330°C can be obtained.

In the molded product of the liquid crystal polymer, the film-shaped liquid crystal polymer is usually molded using a melt extrusion method. However, when an attempt is made to mold a film-shaped liquid crystal polymer by the melt extrusion method for the liquid crystal polymer having a melting point of higher than 330°C, a large amount of fish-eyes of the liquid crystal polymer is generated, or degradation due to decomposition occurs. This is because when a film-shaped liquid crystal polymer is to be molded by the melt extrusion method for the liquid crystal polymer having a melting point of higher than 330°C, it is necessary to heat the liquid crystal polymer to a temperature close to a decomposition temperature and continuously knead the liquid crystal polymer. For this reason, a liquid crystal polymer having a melting point of higher than 330°C and having a film shape cannot be used as the molded product of the liquid crystal polymer.

Next, the molded product of the liquid crystal polymer is coarsely ground to obtain a coarsely ground liquid crystal polymer. For example, the molded product of the liquid crystal polymer is coarsely ground with a cutter mill device to obtain a coarsely ground liquid crystal polymer. The size of a particle of the coarsely ground liquid crystal polymer is not particularly limited as long as the particle can be used as a raw material for the finely grinding step described later. A maximum particle diameter of the coarsely ground liquid crystal polymer is, for example, 3 mm or less.

The method of producing a liquid crystal polymer film according to the present embodiment may not necessarily include the coarsely grinding step. For example, if the molded product of the liquid crystal polymer can be used as a raw material for the finely grinding step, the molded product of the liquid crystal polymer may be directly used as the raw material for the finely grinding step.

In the finely grinding step, the coarsely ground liquid crystal polymer as the liquid crystal polymer is ground in a state of being dispersed in liquid nitrogen to obtain a finely ground liquid crystal polymer in a granular form. In the finely grinding step, the coarsely ground liquid crystal polymer dispersed in liquid nitrogen is ground using a medium. The medium is, for example, a bead. In the finely grinding step of the present embodiment, it is preferable to use a bead mill having relatively few technical problems from the viewpoint of handling liquid nitrogen. Examples of an apparatus that can be used in the finely grinding step include "LNM-08" that is a liquid nitrogen bead mill manufactured by IMEX Co., Ltd.

In the finely grinding step of the present embodiment, a grinding method in which the liquid crystal polymer is ground in the state of being dispersed in liquid nitrogen is different from a conventional freeze grinding method. Although the conventional freeze grinding method is a method of grinding a ground raw material while pouring liquid nitrogen onto the ground raw material and a grinder main body, most of the liquid nitrogen is vaporized at the time when the ground raw material is ground. That is, in the conventional freeze grinding method, most of the ground raw material is not dispersed in the liquid nitrogen at the time when the ground raw material is ground.

In the conventional freeze grinding method, heat of the ground raw material itself, the heat generated from the grinder, and the heat generated by grinding the ground raw material vaporize liquid nitrogen in an extremely short time. Thus, in the conventional freeze grinding method, the raw material during grinding located inside the grinder has a temperature much higher than -196°C, which is the boiling point of liquid nitrogen. That is, in the conventional freeze grinding method, grinding is performed under the condition that an internal temperature of the grinder is usually -100°C or higher and 0°C or lower. In the conventional freeze grinding method, when liquid nitrogen is supplied as much as possible, the temperature inside the grinder is approximately -150°C at the lowest temperature.

For this reason, in the conventional freeze grinding method, for example, when a coarsely ground product of a pelletized liquid crystal polymer uniaxially oriented or a pelletized liquid crystal polymer is ground, grinding proceeds along a plane substantially parallel to an axial direction of a molecular axis of the liquid crystal polymer, and therefore, a fibrous liquid crystal polymer having a very large aspect ratio and a fiber diameter much larger than 3 µm is obtained. That is, in a conventional freeze grinding direction, when the coarsely ground product of the pelletized liquid crystal polymer uniaxially oriented or the pelletized liquid crystal polymer is ground, a granular finely ground liquid crystal polymer as used in the present embodiment cannot be obtained.

In the present embodiment, since the ground raw material is ground in the state of being dispersed in liquid nitrogen, the raw material in a further cooled state can be ground as compared with the conventional freeze grinding method. Specifically, the ground raw material can be ground at a temperature lower than -196°C, which is the boiling point of liquid nitrogen. When the ground raw material having a temperature lower than -196°C is ground, brittle fracture of the ground raw material is repeated, so that the grinding of the raw material proceeds. As a result, for example, when a uniaxially oriented liquid crystal polymer is ground, not only fracture in the plane substantially parallel to the axial direction of the molecular axis of the liquid crystal polymer progresses, but also the brittle fracture progresses along a plane intersecting the axial direction, so that a granular finely ground liquid crystal polymer can be obtained.

In the finely grinding step in the present embodiment, the liquid crystal polymer formed into granules by brittle fracture in liquid nitrogen is continuously subjected to impact with a medium or the like in a brittle state. Thus, in the liquid crystal polymer obtained in the finely grinding step in the present embodiment, a plurality of fine cracks are formed from the outer surface to the inside.

The granular finely ground liquid crystal polymer obtained by the finely grinding step preferably has a D50 of 50 µm or less as measured by a particle size distribution measuring device by a laser diffraction scattering method. This makes it possible to suppress clogging of the granular finely ground liquid crystal polymer with the nozzle in the following fiberizing step.

Next, in the coarse particle removal step, coarse particles are removed from the granular finely ground liquid crystal polymer obtained in the finely grinding step. For example, by sieving the granular finely ground liquid crystal polymer with a mesh, a granular finely ground liquid crystal polymer under a sieve is obtained, and by removing the granular liquid crystal polymer on the sieve, coarse particles contained in the granular finely ground liquid crystal polymer can be removed. The type of mesh may be appropriately selected, and examples of the mesh include a mesh having an opening of 53 µm. The method of producing a liquid crystal polymer powder according to the present embodiment may not necessarily include the coarse particle removal step.

Next, in the fiberizing step, the granular liquid crystal polymer is crushed by a wet high-pressure crushing device to obtain a liquid crystal polymer powder. In the fiberizing step, first, a finely ground liquid crystal polymer is dispersed in a dispersion medium for the fiberizing step. In the finely ground liquid crystal polymer to be dispersed, although coarse particles may not be removed, it is preferable that the coarse particles are removed. Examples of the dispersion medium for the fiberizing step include water, ethanol, methanol, isopropyl alcohol, toluene, benzene, xylene, phenol, acetone, methyl ethyl ketone, diethyl ether, dimethyl ether, hexane, and mixtures thereof.

Then, the finely ground liquid crystal polymer in a state of being dispersed in the dispersion medium for the fiberizing step, that is, the slurry-like finely ground liquid crystal polymer is passed through the nozzle in a state of being pressurized at high pressure. By allowing the liquid crystal polymer to pass through the nozzle at a high pressure, a shearing force or collision energy due to high-speed flow in the nozzle acts on the liquid crystal polymer, and the granular finely ground liquid crystal polymer is crushed, so that the fiberization of the liquid crystal polymer proceeds, and the liquid crystal polymer powder that can be used in the subsequent step can be obtained. A nozzle diameter of the nozzle is preferably as small as possible within a range in which clogging of the finely ground liquid crystal polymer does not occur in the nozzle from the viewpoint of imparting a high shear force or a high collision energy. Since the granular finely ground liquid crystal polymer in the present embodiment has a relatively small particle diameter, the nozzle diameter in the wet high-pressure crushing device used in the fiberizing step can be reduced. The nozzle diameter is, for example, 0.2 mm or less.

In the present embodiment, as described above, a plurality of fine cracks are formed in the granular finely ground liquid crystal polymer powder. Thus, the dispersion medium enters the inside of the finely ground liquid crystal polymer from fine cracks by pressurization in a wet high-pressure crushing device. Then, when the slurry-like finely ground liquid crystal polymer passes through the nozzle and is located under normal pressure, the dispersion medium that has entered the inside of the finely ground liquid crystal polymer expands in a short time. The dispersion medium that has entered the inside of the finely ground liquid crystal polymer expands, whereby fracture progresses from the inside of the finely ground liquid crystal polymer. Thus, fiberization proceeds to the inside of the finely ground liquid crystal polymer, and the molecules of the liquid crystal polymer are separated per domain arranged in one direction. As described above, in the fiberizing step according to the present embodiment, by defibrating the granular finely ground liquid crystal polymer obtained in the finely grinding step in the present embodiment, it is possible to obtain the liquid crystal polymer powder which has a low content of the lump portion and is in the ultrafine short fiber form as compared with the liquid crystal polymer powder obtained by crushing the granular liquid crystal polymer obtained by the conventional freeze grinding method.

In the fiberizing step in the present embodiment, the finely ground liquid crystal polymer may be crushed by a wet high-pressure crushing device to obtain the liquid crystal polymer powder. The number of times of crushing by the wet high-pressure crushing device is preferably small. The number of times of crushing by the wet high-pressure crushing device may be, for example, five times or less.

The obtained liquid crystal polymer powder is used as a raw material in the post-step. Here, the liquid crystal polymer powder that can be used in the method of producing a liquid crystal polymer film according to an embodiment of the present invention will be described in detail.

The liquid crystal polymer powder includes at least a fiber portion. The fiber portion is a short fibrous particle whose aspect ratio that is a ratio of a length in a longitudinal direction to a fiber diameter is 10 times or more and 500 times or less, and is a particle having an average diameter of 2 µm or less. Such a liquid crystal polymer powder containing a fiber portion in the ultrafine short fiber form, which has an aspect ratio of 10 times or more and 500 times or less and an average diameter of 2 µm or less, cannot be produced by a conventionally known production method. For example, the liquid crystal polymer powder containing a fiber portion having an aspect ratio of 10 times or more and 500 times or less cannot be produced only by an electrospinning method which is a method for producing ultrafine continuous long fibers. It is conceivable that liquid crystal polymer ultrafine long fibers of continuous long fibers produced by the electrospinning method are cut after spinning to be formed into short fibers. However, there is a limit to cutting the liquid crystal polymer ultrafine long fibers of the continuous long fibers having an extremely small fiber diameter and an aspect ratio of approximately infinite short. After cutting the liquid crystal polymer ultrafine long fibers of the continuous long fibers produced by the electrospinning method, the liquid crystal polymer ultrafine long fibers have an aspect ratio of more than 500 times.

The value of the average diameter of the fiber portion is an average value of the fiber diameters in a plurality of fibrous particles constituting the fiber portion. As described above, the liquid crystal polymer powder according to the present embodiment contains microfibrous particles. The fiber diameter can be measured from image data of the fibrous particles obtained when the fibrous particles are observed with a scanning electron microscope.

The aspect ratio of the fiber portion is preferably 300 or less, more preferably 100 or less. The average diameter of the fiber portion is preferably 1 µm or less.

The fiber portion as an aggregation portion in which fibrous particles are aggregated may be contained in the liquid crystal polymer powder. In the fiber portion, the axial direction of the molecules of the liquid crystal polymer constituting the fiber portion and the longitudinal direction of the fiber portion coincide with each other. In the method of producing a liquid crystal polymer film according to the present embodiment, since the liquid crystal polymer powder is produced through the above-described fiberizing step, the axial direction of the liquid crystal polymer molecule is strongly aligned is strongly aligned along the longitudinal direction of the fiber portion due to breakage between a plurality of domains formed by bundling the molecules of the liquid crystal polymer.

The liquid crystal polymer powder preferably contains a substantially unfiberized lump portion in a content of 20% or less. It is more preferable that the liquid crystal polymer powder does not contain a lump portion. The content of the lump portion is evaluated by the number of the lump portion with respect to the number of the aggregation portions contained in the liquid crystal polymer powder. In the present embodiment, an aggregation portion having a maximum height of more than 10 µm when the liquid crystal polymer powder is placed on a flat surface is the lump portion, and an aggregation portion having a maximum height of 10 µm or less is the fiber portion.

The lump portion as an aggregation portion containing lump-shaped particles and aggregated may be contained in the liquid crystal polymer powder. The lump portion is a substantially unfiberized liquid crystal polymer powder. The lump portion may have a flat outer shape.

In the liquid crystal polymer powder according to the present embodiment, a value of D50 measured by particle size measurement using a particle size distribution measuring device by a laser diffraction scattering method is preferably 13 µm or less.

The liquid crystal polymer powder used as the raw material in the post-step is not limited to the liquid crystal polymer powder produced in the above-described pre-step.

### <Post-step>

First, the post-step will be described. In the dispersion step which is the first step of the post-step, the liquid crystal polymer powder is dispersed in a dispersion medium to form a paste or a slurry. As described above, in the present embodiment, since the liquid crystal polymer powder in the ultrafine short fiber form is used, the liquid crystal polymer powder can be dispersed in a highly viscous dispersion medium. As a result, a homogeneous liquid crystal polymer film can be produced.

Examples of the dispersion medium used in the dispersion step include water, terpineol, ethanol, and mixtures thereof. For example, when terpineol is used as the dispersion medium, a paste-like liquid crystal polymer powder is obtained. When a mixture of ethanol and water is used as the dispersion medium, a slurry-like liquid crystal polymer is obtained.

It is considered that the longitudinal direction of the fiber portion in the liquid crystal polymer powder dispersed in the dispersion medium is not oriented in a specific direction in the dispersion medium.

As described later, when a liquid crystal polymer film is produced by a melt extrusion method which is one of conventional methods of producing a liquid crystal polymer film, a film-shaped liquid crystal polymer film produced by the melt extrusion method may be further stretched. However, by the stretching, the main alignment direction of the molecules located in the inner layer of the liquid crystal polymer film is not changed along the in-plane direction from the state of being inclined in the thickness direction of the film. In addition, in a liquid crystal polymer film produced by the melt extrusion method and stretching, the main alignment direction of the molecules in the surface layer is inclined in a flow direction (MD) with respect to the main alignment direction of the molecules in the inner layer. More specifically, in the liquid crystal polymer film produced by the melt extrusion method and stretching, a ratio of a flow direction (MD) component in the main alignment direction of the molecules to a vertical direction (TD) component is different between the surface layer and the inner layer. Thus, in the liquid crystal polymer film produced by the melt extrusion method and stretching, the main alignment direction of the molecules in the surface layer and the main alignment direction of the molecules in the inner layer are different from each other. In the stretching step, the liquid crystal polymer film may be cut due to low melt tension of the liquid crystal polymer film.

Next, in the matting step, the paste-like or slurry-like liquid crystal polymer powder is dried to form a liquid crystal polymer fiber mat. In an embodiment of the present invention, the matting step includes, for example, an application step and a drying step.

In the application step, a paste-like liquid crystal polymer powder is applied to a metal foil such as a copper foil. In the application step, a paste-like liquid crystal polymer powder is applied onto a metal foil such as a copper foil as described above; however, a polyimide film, a PTFE (polytetrafluoroethylene) film, or a composite sheet including a reinforcing material such as a glass fiber fabric and a heat-resistant resin may be used instead of the metal foil. This makes it easy to industrially produce a liquid crystal polymer film.

Next, the paste-like liquid crystal polymer applied to the copper foil is heated and dried in the drying step to vaporize the dispersion medium. The dispersion medium may be vaporized by suction. By the above heating and drying, a liquid crystal polymer fiber mat is formed on a metal foil such as a copper foil.

In the drying step, since the dispersion medium is gradually removed from the paste-like liquid crystal polymer powder, the entire thickness of the paste-like liquid crystal polymer powder gradually decreases during drying. Thus, the thickness of the liquid crystal polymer fiber mat is thinner than the entire thickness of the paste-like liquid crystal polymer formed on the copper foil. Specifically, in the present embodiment, the entire thickness of the paste-like liquid crystal polymer powder is about 700 µm, and the thickness of the liquid crystal polymer fiber mat is, for example, about 150 µm.

In addition, as the entire thickness of the paste-like liquid crystal polymer powder gradually decreases during drying, the longitudinal direction of the fiber portion in the polymer powder changes. Specifically, among the fiber portions, the fiber portion having a longitudinal direction in a direction along the entire thickness direction of the paste-like liquid crystal polymer powder is inclined such that the longitudinal direction is directed in the in-plane direction of the copper foil. Thus, there is anisotropy in the longitudinal direction of the fiber portion in the molded liquid crystal polymer fiber mat.

In the matting step, a paste-like liquid crystal polymer may be further applied onto the liquid crystal polymer fiber mat formed on the metal foil in the drying step, and then the liquid crystal polymer may be dried to vaporize the dispersion medium. As described above, the matting step may include the application step and the drying step repeatedly in this order. Thus, a liquid crystal polymer fiber mat having a desired basis weight can be obtained.

The liquid crystal polymer fiber mat has a void between liquid crystal polymer powders. As described above, since the longitudinal direction of the fiber portion in the liquid crystal polymer powder is generally inclined toward the in-plane direction of the copper foil, a porosity of the liquid crystal polymer fiber mat is relatively small. The liquid crystal polymer fiber mat according to the present embodiment is formed such that the fiber portions of the liquid crystal polymer powder are entangled with each other.

When a conventional granular liquid crystal polymer powder having no fiber portion like the liquid crystal polymer powder in the present embodiment, for example, a spherical liquid crystal polymer powder, is matted, the direction of the spherical liquid crystal polymer does not change if the liquid crystal polymer is matted by the same method as the matting step, and therefore, the axial direction of the molecules of the liquid crystal polymer contained in the liquid crystal polymer fiber mat to be molded is not aligned in a specific direction. The liquid crystal polymer mat matted with the spherical liquid crystal polymer powder has a lower porosity than the liquid crystal polymer fiber mat of the present embodiment.

In the matting step in the present embodiment, a slurry-like liquid crystal polymer powder may be molded into a liquid crystal polymer fiber mat by a papermaking method instead of the application step and the drying step. According to the papermaking method, it is not necessary to use a special dispersion medium used in the application step, for example, expensive terpineol. In the papermaking method, the dispersion medium used in the dispersion step can be recovered and reused. As described above, the liquid crystal polymer film can be produced at low cost by the papermaking method.

In the matting step using the papermaking method, specifically, first, a slurry-like liquid crystal polymer powder is paper-made on a mesh, a nonwoven fabric-like microporous sheet, or a woven fabric. Then, the slurry-like liquid crystal polymer disposed on the mesh is heated and dried to obtain a liquid crystal polymer fiber mat.

Next, in the heat-pressing step, the liquid crystal polymer fiber mat is heat-pressed to obtain a liquid crystal polymer film. Specifically, in the heat-pressing step, the liquid crystal polymer fiber mat is heat-pressed together with a copper foil. Thus, the heat-pressing step also serves as a step of bonding the liquid crystal polymer film and the copper foil to each other, so that a liquid crystal polymer film to which the copper foil is bonded can be obtained at low cost. When heating is performed for a long time in the heat-pressing step, the liquid crystal polymer fiber mat is preferably subjected to vacuum heat-pressing.

In the heat-pressing step, it is preferable to perform heat-pressing at a temperature lower by about 5°C to 15°C than the melting point of the liquid crystal polymer constituting the liquid crystal polymer powder. When heat-pressing is performed at a temperature lower by about 5°C to 15°C than the endothermic peak temperature, sintering of the liquid crystal polymers easily proceeds.

In the heat-pressing step, a polyimide film, a PTFE film, or a composite sheet including a reinforcing material such as a glass fiber fabric and a heat-resistant resin may be interposed as a release film between a pressing machine and the liquid crystal polymer fiber mat used in the heat-pressing step. In place of the polyimide film, an additional copper foil may be interposed between the pressing machine and the liquid crystal polymer fiber mat. This makes it possible to obtain a liquid crystal polymer film in which copper foils are bonded to both surfaces. The liquid crystal polymer film in which the copper foils are bonded to both surfaces can be used as a double-sided copper clad FCCL.

An outer dimension of the liquid crystal polymer film molded by the heat-pressing step as viewed from the thickness direction, that is, a planar dimension along a film surface is substantially the same as that of the liquid crystal polymer fiber mat before heat-pressing. Then, by heat-pressing, among the fiber portions of the liquid crystal polymer powder in the liquid crystal polymer fiber mat, the fiber portion having the longitudinal direction in a direction along the thickness direction of the liquid crystal polymer fiber mat is heated while being pushed down in the in-plane direction of the copper foil. Since the liquid crystal polymer constituting the liquid crystal polymer powder has the axial direction of the molecule in the longitudinal direction of the fiber portion, the axial direction of the molecule of the liquid crystal polymer is also pushed down in the in-plane direction of the copper foil. Thus, in the molded liquid crystal polymer film, the main alignment direction of the molecules of the liquid crystal polymer is along the in-plane direction of the copper foil, that is, the in-plane direction of the liquid crystal polymer film. However, in the lump portion, the axial direction of the molecule is random, and depending on a ratio of the lump portion contained in the liquid crystal polymer film, there is a portion where the axial direction of the molecule of the liquid crystal polymer is directed in the thickness direction of the liquid crystal polymer film. That is, more specifically, in the in-plane direction of the liquid crystal polymer film, there are a region in which a ratio where the molecules of the liquid crystal polymer face the axial direction in the thickness direction of the liquid crystal polymer film is large and a region in which a ratio where the molecules of the liquid crystal polymer face the in-plane direction is large. In addition, more specifically, except for the molecules constituting the lump portion, the axial direction of each molecule constituting the liquid crystal polymer is aligned along the in-plane direction of the liquid crystal polymer film over the thickness direction of the liquid crystal polymer film.

In addition, the liquid crystal polymer powder in the liquid crystal polymer fiber mat may be bonded to each other while the fiber portions are entangled with each other. Thus, the liquid crystal polymer in the liquid crystal polymer film has a structure in which molecules are entangled with each other. Since the fiber portion has a larger surface area than a spherical liquid crystal polymer having the same volume, a bonding area also increases when the liquid crystal polymer powders are bonded to each other by the heat-pressing step. Thus, the liquid crystal polymer film according to the present embodiment is improved in toughness and folding resistance. By the heat-pressing step, the thickness of the liquid crystal polymer film is thinner than that of the liquid crystal polymer fiber mat.

A conventional granular liquid crystal polymer powder having no fiber portion, such as the liquid crystal polymer powder in the present embodiment, for example, a liquid crystal polymer mat obtained by matting a spherical liquid crystal polymer powder does not contain a fiber portion having the axial direction of the molecular axis in the longitudinal direction. Thus, when such a liquid crystal polymer mat is heat-pressed, the axial direction of the molecules constituting the liquid crystal polymer in the liquid crystal polymer film is not pushed down. Thus, when a liquid crystal polymer film is produced using the liquid crystal polymer powder using the conventional granular liquid crystal polymer powder having no fiber portion, the main alignment direction of each molecule constituting the liquid crystal polymer is not along the in-plane direction of the liquid crystal polymer film.

When the liquid crystal polymer fiber mat obtained by matting the conventional granular liquid crystal polymer powder having no fiber portion is heat-pressed, the bonding area is extremely small when the liquid crystal polymer powders are bonded to each other. For this reason, when the liquid crystal polymer film produced using the conventional liquid crystal polymer powder having no fiber portion is subjected to an external force, stress concentrates on a bonding portion between the liquid crystal polymer powders. Since the bonding area of the bonding portion is small, when the liquid crystal polymer film is subjected to an external force, the liquid crystal polymer film is broken at the bonding portion. As described above, the liquid crystal polymer film produced using the conventional liquid crystal polymer powder having no fiber portion has low strength and low toughness and folding resistance. The liquid crystal polymer film cannot be used as a substrate for FPC, a diaphragm, or a damping plate.

In the liquid crystal polymer film immediately after being molded using the conventional melt extrusion method, the liquid crystal polymer molecules contained in each of the pair of surface layers of the liquid crystal polymer film flow while being in direct contact with a jig such as a die, and thus, are strongly aligned in the flow direction (MD) which is one of the in-plane directions of the liquid crystal polymer film. On the other hand, in the liquid crystal polymer molecules contained in the inner layer of the conventional liquid crystal polymer film, an orientation in the flow direction (MD) of the liquid crystal polymer film is weakened. That is, in the conventional liquid crystal polymer film, the main alignment direction of the liquid crystal polymer film included in the inner layer is inclined in the vertical direction (TD) orthogonal to the flow direction (MD) in the in-plane direction of the liquid crystal polymer film. For this reason, the liquid crystal polymer film immediately after being formed using a conventional melt-extrusion direction has a boundary surface between each of the pair of surface layers and the inner layer. In the liquid crystal polymer film immediately after being molded by the melt extrusion method, the liquid crystal polymer film may be further stretched or the like. However, in the liquid crystal polymer film immediately after being molded by the melt extrusion method as described above, since the liquid crystal polymer molecules in the pair of surface layers are strongly aligned in the flow direction (MD), the main alignment direction of the liquid crystal polymer molecules in the inner layer is not parallel to the main alignment direction of the liquid crystal polymer molecules in the pair of surface layers after the stretching. As described above, in the liquid crystal polymer film produced by the melt extrusion method, the main alignment direction of each molecule constituting the liquid crystal polymer contained in the pair of surface layers and the main alignment directions of each molecule constituting the liquid crystal polymer contained in the inner layer are not parallel to each other. In the conventional liquid crystal polymer film as described above, an interface is generated between the pair of surface layers and the inner layer of the liquid crystal polymer film, and peeling easily occurs along the interface.

Finally, the metal foil bonded to the liquid crystal polymer film may be removed by etching or the like as necessary. As a result, a single liquid crystal polymer film to which the metal foil is not bonded is obtained.

As described above, the method of producing a liquid crystal polymer film according to an embodiment of the present invention includes the dispersion step, the matting step, and the heat-pressing step. In the dispersion step, a liquid crystal polymer powder, which is a short fibrous particle whose aspect ratio that is the ratio of the length in the longitudinal direction to the fiber diameter is 10 times or more and 500 times or less and contains a fiber portion having an average diameter of 2 µm or less, is dispersed in a dispersion medium to form a slurry. In the matting step, the slurry-like liquid crystal polymer powder is dried to form a liquid crystal polymer fiber mat. In the heat-pressing step, the liquid crystal polymer fiber mat is heat-pressed to obtain a liquid crystal polymer film.

According to the above configuration, a liquid crystal polymer film can be produced from the liquid crystal polymer powder in the ultrafine short fiber form, which cannot be achieved by a conventional liquid crystal polymer powder, so that a liquid crystal polymer film suitable as a circuit board can be obtained. In addition, as a raw material, a liquid crystal polymer having a melting point higher than 330°C can be employed, and a liquid crystal polymer film containing the liquid crystal polymer having a melting point higher than 330°C can be produced.

### EXAMPLES

Hereinafter, the present invention will be described in more detail using examples with reference to the drawings, but the present invention is not limited thereto.

### (Example 1)

In Example 1, first, as a liquid crystal polymer molded product as a raw material, a film-shaped liquid crystal polymer having a thickness of 250 µm and molecules biaxially oriented in a plane direction was coarsely ground by charging the liquid crystal polymer into a cutter mill device. The melting point of the liquid crystal polymer used in Example 1 was 315°C. The coarsely ground film-shaped liquid crystal polymer was discharged from a discharge hole having a diameter of 3 mm provided in a cutter mill device to obtain a coarsely ground liquid crystal polymer.

Next, the coarsely ground liquid crystal polymer was finely ground with a liquid nitrogen bead mill (LNM-08 manufactured by IMEX Co., Ltd.). In the grinding with the liquid nitrogen bead mill, a vessel capacity was set to 0.8 L, zirconia beads having a diameter of 5 mm were used as media, an amount of the media charged was set to 500 mL, 30 g of the coarsely ground liquid crystal polymer was charged, and grinding treatment was performed at a rotation speed of 2000 rpm for 120 minutes. In the liquid nitrogen bead mill, the coarsely ground liquid crystal polymer was dispersed in liquid nitrogen to perform wet grinding treatment. As described above, the coarsely ground liquid crystal polymer was ground in the liquid nitrogen bead mill to obtain a finely ground liquid crystal polymer in a granular form.

The particle size of the finely ground liquid crystal polymer was measured. In the particle size measurement, first, a finely ground liquid crystal polymer was dispersed in a dispersion medium. As the dispersion medium, ENEKIN was used. Then, the finely ground liquid crystal polymer dispersed in the dispersion medium was subjected to ultrasonic treatment for 10 seconds, and then set in a particle size distribution measuring device (LA-950 manufactured by HORIBA, Ltd.) by a laser diffraction scattering method to measure the particle size. The value of D50 of the finely ground liquid crystal polymer was 23 µm.

Next, the finely ground liquid crystal polymer was sieved with a mesh having an opening of 53 µm to remove coarse particles contained in the finely ground liquid crystal polymer, and the finely ground liquid crystal polymer having passed through the mesh was recovered. A yield of the finely ground liquid crystal polymer by the removal of coarse particles was 85% by mass.

Next, the finely ground liquid crystal polymer from which the coarse particles had been removed was dispersed in a 20 wt% ethanol aqueous solution. An ethanol slurry in which the finely ground liquid crystal polymer was dispersed was repeatedly ground five times using a wet high-pressure crushing device under the conditions of a nozzle diameter of 0.2 mm and a pressure of 200 MPa to be formed into fibers. NanoVater (registered trademark) C-ES008 manufactured by Yoshida Kikai Co., Ltd. was used as the wet high-pressure crushing device. As a result, a liquid crystal polymer powder dispersed in an ethanol aqueous solution was obtained.

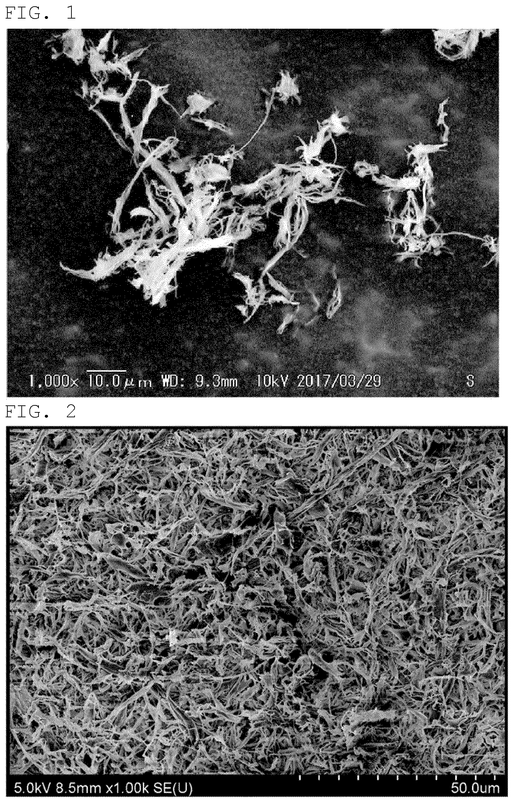

FIG. 1 is a photograph of the liquid crystal polymer powder in Example 1. As shown in FIG. 1, it can be seen from visual observation of a photograph that the finely ground liquid crystal polymer was ground to obtain a fine fibrous liquid crystal polymer powder. The photographs in FIG. 1 and FIG. 2 shown below were taken with a scanning electron microscope.

Next, terpineol having a mass 20 times the mass of the dispersed liquid crystal polymer powder was added to the ethanol aqueous solution in which the liquid crystal polymer powder was dispersed. Then, the aqueous solution was heated while being stirred to vaporize and remove water and ethanol. Thus, a liquid crystal polymer powder dispersed in terpineol was obtained. That is, the liquid crystal polymer powder was dispersed in terpineol as a dispersion medium to form a paste.

Next, a paste-like liquid crystal polymer was applied onto a roughened surface of an electrolytic copper foil (FWJ-WS-12 manufactured by Furukawa Electric Co., Ltd.) having a thickness of 12 µm. Then, the electrolytic copper foil applied with the paste-like liquid crystal polymer powder was heated to 130°C on a hot plate to vaporize terpineol as a dispersion medium, and the paste-like liquid crystal polymer powder on the electrolytic copper foil was dried. In this way, a thin liquid crystal polymer fiber mat was formed on the electrolytic copper foil.

The paste-like liquid crystal polymer powder was further applied onto the thin liquid crystal polymer fiber mat. The applied paste-like liquid crystal polymer powder was dried in the same manner as when the paste-like liquid crystal polymer applied previously was dried. As described above, the application and drying were repeated a plurality of times to mold the liquid crystal polymer fiber mat adjusted so that the basis weight was 35 g/m² on the electrolytic copper foil.

FIG. 2 is a photograph of a surface of the liquid crystal polymer fiber mat in Example 1. As shown in FIG. 2, it can be seen from visual observation of a photograph that a liquid crystal polymer fiber mat is obtained by repeating application and drying. In this example, the porosity of the liquid crystal polymer fiber mat was about 85%.

Next, the liquid crystal polymer fiber mat formed on the electrolytic copper foil was heat-pressed together with the electrolytic copper foil using a vacuum heating press apparatus (KVHC manufactured by Kitagawa Seisakusho). Specifically, first, a release film was stacked on an opposite side to the electrolytic copper foil side of the liquid crystal polymer fiber mat molded on the electrolytic copper foil. As the release film, a polyimide film (Kapton (registered trademark) 100H manufactured by DU PONT-TORAY CO., LTD.) was used. Then, the liquid crystal polymer fiber mat on which the release film was stacked was set in the vacuum heating press apparatus at room temperature. The temperature of the set liquid crystal polymer fiber mat was raised to 305 °C at a rate of 7 °C/min while the liquid crystal polymer fiber mat was pressed together with the release film and the electrolytic copper foil at a press pressure of 0.2 MPa. After the temperature reached 305 °C, the liquid crystal polymer film was pressed together with the release film and the electrolytic copper foil at a press pressure of 6 Mpa for 5 minutes while the temperature was maintained at 305°C. After completion of the heat-pressing, the release film was removed to obtain a liquid crystal polymer film formed on the electrolytic copper foil.

Finally, the electrolytic copper foil bonded to the liquid crystal polymer film was removed by etching using an aqueous solution of ferric chloride. Thus, a liquid crystal polymer film was obtained. The thickness of the liquid crystal polymer film was 25 µm.

### (Example 2)

In Example 2, a liquid crystal polymer having a melting point of 315°C and a composition molar ratio of parahydroxybenzoic acid: 2,6-hydroxynaphthoic acid = 80 mol%: 20 mol% was used.

A liquid crystal polymer film was obtained in the same manner as in Example 1 except for the above points.

### (Example 3)

In Example 3, in place of the film-shaped liquid crystal polymer charged into the cutter mill device in the coarsely grinding step in Example 1, as a liquid crystal polymer molded product as a raw material, a pelletized liquid crystal polymer uniaxially oriented was charged into the cutter mill device to obtain a coarsely ground liquid crystal polymer. In Example 3, unlike Example 2, a pelletized liquid crystal polymer having a melting point of 350°C and a composition molar ratio of parahydroxybenzoic acid: 2,6-hydroxynaphthoic acid = 80 mol%: 20 mol% was used.

From the obtained coarsely ground liquid crystal polymer, a liquid crystal polymer fiber mat was obtained in the same manner as in Example 1.

In Example 3, in the heat-pressing step, the temperature of the liquid crystal polymer fiber mat was raised together with the release film and the electrolytic copper foil at a rate of 7°C/min until the temperature reached 345°C, and after the temperature reached 345°C, the liquid crystal polymer fiber mat was pressed at a pressing pressure of 6 Mpa for 5 minutes while the temperature was maintained at 345°C. Other conditions are the same as those of the heat-pressing step in Example 1.

Finally, the electrolytic copper foil was removed in the same manner as in Example 1 to obtain a liquid crystal polymer film.

### (Example 4)

In Example 4, in place of the film-shaped liquid crystal polymer charged into the cutter mill device in the coarsely grinding step in Example 1, a powdery liquid crystal polymer having a melting point of 400°C and a composition molar ratio of parahydroxybenzoic acid: 2,6-hydroxynaphthoic acid = 85 mol%: 15 mol% was used.

From the obtained coarsely ground liquid crystal polymer, a liquid crystal polymer fiber mat was obtained in the same manner as in Example 1.

In Example 4, in the heat-pressing step, the temperature of the liquid crystal polymer fiber mat was raised together with the release film and the electrolytic copper foil at a rate of 7°C/min until the temperature reached 385°C, and after the temperature reached 385°C, the liquid crystal polymer fiber mat was pressed at a pressing pressure of 6 Mpa for 5 minutes while the temperature was maintained at 385°C. Other conditions are the same as those of the heat-pressing step in Example 1.

Finally, the electrolytic copper foil was removed in the same manner as in Example 1 to obtain a liquid crystal polymer film.

### (Example 5)

In Example 5, in place of the film-shaped liquid crystal polymer charged into the cutter mill device in the coarsely grinding step in Example 1, a powdery liquid crystal polymer having a melting point of 400°C and a composition molar ratio of parahydroxybenzoic acid: 2,6-hydroxynaphthoic acid = 10 mol%: 90 mol% was used.

From the obtained coarsely ground liquid crystal polymer, a liquid crystal polymer fiber mat was obtained in the same manner as in Example 1.

In Example 4, in the heat-pressing step, the temperature of the liquid crystal polymer fiber mat was raised together with the release film and the electrolytic copper foil at a rate of 7°C/min until the temperature reached 385°C, and after the temperature reached 385°C, the liquid crystal polymer fiber mat was pressed at a pressing pressure of 6 Mpa for 5 minutes while the temperature was maintained at 385°C. Other conditions are the same as those of the heat-pressing step in Example 1.

Finally, the electrolytic copper foil was removed in the same manner as in Example 1 to obtain a liquid crystal polymer film.

### (Example 6)

In Example 6, first, a liquid crystal polymer powder was obtained in the same manner as in Example 3. Then, ethanol and water were further added as necessary to the ethanol aqueous solution in which the liquid crystal polymer powder was dispersed in the dispersion step to prepare a slurry-like liquid crystal polymer powder for the matting step. Specifically, a slurry-like liquid crystal polymer powder containing 2.18 g of the liquid crystal polymer powder in 30 L of a 50 wt% ethanol aqueous solution was obtained. That is, the liquid crystal polymer powder was dispersed in ethanol as a dispersion medium to form a slurry.

Next, in the matting step, the slurry-like liquid crystal polymer powder was molded into a liquid crystal polymer fiber mat by a papermaking method. Specifically, first, the slurry-like liquid crystal polymer powder was paper-made on a microporous sheet using a square sheet machine 2556 manufactured by KUMAGAI RIKI KOGYO Co., Ltd. The microporous sheet formed of a wet nonwoven fabric of polyester microfibers and having a basis weight of 14 g/m² was used. Then, a liquid crystal polymer fiber mat having a basis weight of 35 g/m² was molded on the microporous sheet by heating and drying at a temperature of 100°C using a hot air dryer.

Then, an electrolytic copper foil (FWJ-WS-12 manufactured by Furukawa Electric Co., Ltd.) having a thickness of 12 µm was disposed on an opposite side to the microporous sheet of the liquid crystal polymer fiber mat molded on the microporous sheet. The electrolytic copper foil was disposed such that the liquid crystal polymer fiber mat was in contact with a roughened surface of the electrolytic copper foil.

The liquid crystal polymer fiber mat disposed on the electrolytic copper foil was peeled off from the microporous sheet, and then heat-pressed in the heat-pressing step. The liquid crystal polymer fiber mat was pressed together with the release film and the electrolytic copper foil. Other conditions are the same as those in Example 3.

Finally, the electrolytic copper foil was removed in the same manner as in Example 3 to obtain a liquid crystal polymer film.

For the steps after the matting step, a liquid crystal polymer film was obtained by the same production method as in Example 2.

### (Comparative Example 1)

In Comparative Example 1, first, a film-shaped liquid crystal polymer biaxially oriented was coarsely ground with a cutter mill device in the same manner as in Example 1 to obtain a coarsely ground liquid crystal polymer.

Next, the coarsely ground liquid crystal polymer was finely ground using a dry freeze grinder (Linlex Mill (registered trademark) manufactured by Hosokawa Micron Corporation). In this dry freeze grinder, liquid nitrogen was supplied to the inside of the apparatus together with the coarsely ground liquid crystal polymer. However, since the liquid nitrogen supplied to the inside of the apparatus is instantaneously vaporized, nitrogen exists as a gas inside the apparatus. By grinding the coarsely ground liquid crystal polymer in this way, a finely ground liquid crystal polymer having a D50 value of 20 µm was obtained.

Next, the finely ground liquid crystal polymer was sieved with a mesh having an opening of 25 µm to remove coarse particles, and the finely ground liquid crystal polymer having passed through the mesh was recovered.

A liquid crystal polymer film was obtained by the same production method as in the steps after the dispersion step in Example 1 except that the finely ground liquid crystal polymer from which coarse particles had been removed was used instead of the liquid crystal polymer powder used in the dispersion step in Example 1. The porosity of the liquid crystal polymer fiber mat was about 40%.

### (Comparative Example 2)

In Comparative Example 2, first, a film-shaped liquid crystal polymer biaxially oriented was coarsely ground with a cutter mill device in the same manner as in Example 1 to obtain a coarsely ground liquid crystal polymer.

Next, the coarsely ground liquid crystal polymer was finely ground using the same dry freeze grinder as in Comparative Example 1 to obtain a finely ground liquid crystal polymer having a D50 value of 25 µm.

The finely ground liquid crystal polymer was sieved with a mesh having an opening of 53 µm to remove coarse particles, and the finely ground liquid crystal polymer having passed through the mesh was recovered.

A liquid crystal polymer film was obtained by the same production method as in the steps in Example 1 for the steps after the fiberizing step of fiberizing the finely ground liquid crystal polymer from which the coarse particles had been removed using a wet high-pressure crushing device.

### [Measurement of average diameter and average aspect ratio of fiber portion]

In Examples 1 to 4 and Comparative Example 2, the average diameter of the liquid crystal polymer powder used as a raw material in the post-step was measured. In the measurement of the average diameter of the liquid crystal polymer powder, first, the liquid crystal polymer powder to be measured was dispersed in ethanol to prepare a slurry containing a 0.01 wt% liquid crystal polymer powder. At that time, the slurry was prepared so that a moisture content in the slurry was 1 wt% or less. Then, 5 µL to 10 µL or less of this slurry was dropped onto a slide glass, and then the slurry on the slide glass was naturally dried. The liquid crystal polymer powder was disposed on the slide glass by naturally drying the slurry.

Next, a predetermined region of the liquid crystal polymer powder disposed on the slide glass was observed with a scanning electron microscope to collect 100 or more image data of the particles constituting the liquid crystal polymer powder.

In the collection of the image data, the region was set according to the size per particle of the liquid crystal polymer so that the number of image data was 100 or more. For each particle of the liquid crystal polymer, the image data was collected by appropriately changing the magnification of the scanning electron microscope to 500 times, 3,000 times, or 10,000 times in order to suppress leakage of the collection of the image data and occurrence of a measurement error.

Next, the longitudinal dimension and width direction dimension of each particle of the liquid crystal polymer powder were measured using the collected image data. The longitudinal direction was defined as a direction along the longest path among paths that can be taken on one particle of the liquid crystal polymer powder photographed in each of the pieces of image data, that is, paths that pass from one end of the particle through substantially the center of the particle and reach an end opposite to the one end. The length dimension of the longest path was measured as the longitudinal dimension. In addition, a particle dimension of one particle of the liquid crystal polymer powder in a direction orthogonal to the longitudinal direction was measured at three different points in the longitudinal direction. An average value of the dimensions measured at these three points was taken as the width direction dimension per particle of the liquid crystal polymer powder.

One particle of the liquid crystal polymer powder in which the longitudinal dimension was 10 times or more the width direction dimension was defined as a fibrous particle constituting the fiber portion. That is, the fiber diameter of the particles constituting the liquid crystal polymer powder in the fiber portion is the width direction dimension of the liquid crystal polymer powder. The fiber diameters of 100 fibrous particles constituting the fiber portion were measured. A value obtained by averaging the measurement results of these fiber diameters was taken as the average diameter of the fiber portion.

The longitudinal dimension with respect to the width dimension is an aspect ratio that is the ratio of the length in the longitudinal direction with respect to the fiber diameter. The aspect ratio of the 100 fibrous particles was measured, and a value obtained by averaging the measurement results of each particle was taken as the aspect ratio of the fiber portion.

In Comparative Example 1, the average diameter and the aspect ratio of the fiber portion of a finely ground liquid crystal polymer used as a starting material in the post-step were measured. These measurement methods were the same as the method of measuring the average diameter and the aspect ratio of the fiber portion of the liquid crystal polymer powder in each of Examples 1 to 4 and Comparative Example 2.

### [Evaluation of content of lump portion]

In Examples 1 to 4 and Comparative Example 2, the content of the lump portion contained in the liquid crystal polymer powder used as a raw material in the post-step was evaluated.

In the evaluation of the content of the lump portion, first, the liquid crystal polymer powder to be evaluated was collected in a slurry state immediately after being crushed by the wet high-pressure crushing device. Ethanol was additionally mixed with the collected slurry-like liquid crystal polymer powder to further dilute the slurry-like liquid crystal polymer powder. Ethanol was additionally mixed until the content of the liquid crystal polymer powder in the slurry was diluted to 0.01 wt% or less. Ethanol as a dispersion medium of the slurry was vaporized by dropping the diluted slurry onto a slide glass and then leaving it at normal temperature. In this way, the liquid crystal polymer powder was disposed on the glass slide.

Next, the liquid crystal polymer powder disposed on the slide glass was observed at a magnification of 100 times using a laser microscope (VK-8700 manufactured by KEYENCE CORPORATION). From this observation, it was confirmed that the liquid crystal polymer powder contained a plurality of aggregation portions in Examples 1 and 2 and Comparative Example 2.

In the liquid crystal polymer powder to be measured, the maximum height of each of the plurality of aggregation portions was measured. A method of measuring the maximum height of the aggregation portion will be described below. First, for the aggregation portion disposed on the slide glass, a contour diagram of the height with the surface of the slide glass as a reference height was created using a data analysis application attached to the laser microscope. The contour diagram was created by correcting inclination of the slide glass so that the surface of the slide glass on the liquid crystal polymer powder side was horizontal.

For the liquid crystal polymer powder to be measured, 30 aggregation portions were selected by the microscope observation, and the maximum height was measured for each of these aggregation portions. Then, the aggregation portion having a maximum height of 10 µm was determined to be a lump portion in which the liquid crystal polymer was not fibrous. In the liquid crystal polymer powder, a ratio of the number of the lump portions to 30 aggregation portions whose maximum height was measured was evaluated as the content of the lump portion contained in the liquid crystal polymer powder.

In Comparative Example 1, the content of the lump portion contained in the finely ground liquid crystal polymer was evaluated for the finely ground liquid crystal polymer used as a starting material in the post-step. The content of the lump portion in Comparative Example 1 was evaluated in the same manner as the method for evaluating the content of the lump portion contained in the liquid crystal polymer powder in each of Examples 1 and 2 and Comparative Example 2.

### [MIT folding endurance fatigue test]

The liquid crystal polymer film according to each of Examples 1 to 4 and Comparative Examples 1 and 2 was subjected to an MIT folding endurance fatigue test using an MIT folding endurance fatigue tester. The test was performed on a test film having a width of 10 mm and a thickness of 25 µm collected from each liquid crystal polymer film under the conditions of a load of 500 g, a curvature radius of 0.2 mm, a bending angle of 135 degrees, and a speed of 175 cpm.

### [Warpage amount test]

An amount of warpage of each liquid crystal polymer film before a copper foil was removed in a copper foil removing step in Examples 1 to 4 and Comparative Examples 1 and 2 was measured. Specifically, first, each liquid crystal polymer film to which the copper foil was bonded was cut into 150 mm × 150 mm to obtain a sample for a warpage amount test. This sample was allowed to stand on a glass plate such that a surface of the sample on a curved and protruding side was located on the glass plate side. Then, a separation distance between each of four corners of the sample and a surface of the glass plate in a normal direction of the surface of the glass plate was measured. An average value of the separation distances of the four corners was taken as an absolute value of the amount of warpage. When the sample was allowed to stand on the glass plate as described above, the amount of warpage was set to a positive value when the liquid crystal polymer film was located on an opposite side to the glass plate side of the sample, and the amount of warpage was set to a negative value when the copper foil was located on the opposite side to the glass plate side of the sample.

### [Solder heat resistance temperature test]

For each of the liquid crystal polymer films of Examples 1 to 4 and Comparative Examples 1 and 2, a solder heat resistance temperature was measured. First, each liquid crystal polymer film from which the copper foil had been removed in the copper foil removing step was disposed on silicone rubber having a thickness of 5 mm. A soldering iron tip whose temperature was raised to 250 °C was pressed against the liquid crystal polymer film on the silicone rubber. When the liquid crystal polymer film was not deformed or perforated, the temperature of the soldering tip was further raised to 10°C, and the soldering iron tip was pressed again. This temperature raise and pressing were repeated until the liquid crystal polymer film was deformed or perforated. When deformation or perforation did not occur, the highest temperature among the temperatures at the soldering tip was defined as the solder heat resistance temperature. As the soldering iron, a Hakko soldering iron station FX 951-51 manufactured by Hakko was used.

### [Measurement of relative permittivity]

In each of the liquid crystal polymer films according to Examples 1 to 4 and Comparative Examples 1 and 2, a relative permittivity in the in-plane direction of the surface of the liquid crystal polymer film was measured by a cavity resonator method.

**[Table 1]**

| | Raw material for post-step | | | Liquid crystal polymer film | | | |
|---|---|---|---|---|---|---|---|
| | Average diameter (µm) | Aspect ratio | Content of lump portion (%) | Number of times of MIT folding endurance (times) | Warpage amount (mm) | Solder heat resistance temperature (°C) | Relative permittivity |
| Example 1 | 0.96 | 50 | 3 | 1000 | 5 | 290 | 3.41 |
| Example 2 | 0.84 | 57.5 | 3 | 1100 | 2 | 290 | 3.41 |
| Example 3 | 0.60 | 62.5 | 0 | 1800 | -2 | 330 | 3.32 |
| Example 4 | 0.60 | 62.5 | 0 | 2000 | -5 | 330 | 3.33 |
| Comparative Example 1 | - | 1.3 | 90 | - | - | 250 | - |
| Comparative Example 2 | 5 | - | 67 | 10 | 20 | 280 | 3.35 |

Table 1 shows the results of the measurement of the average diameter and average aspect ratio of the fiber portion and the evaluation of the content of the lump portion for the raw material in the post-step in each Example and each Comparative Example, and shows the results of the MIT folding endurance fatigue test, the warpage amount test, the solder heat resistance temperature test, and the measurement of the relative permittivity for the liquid crystal polymer film. As shown in Table 1, the liquid crystal polymer film according to Examples 1 to 4 was produced by using, as a raw material for the post-step, a liquid crystal polymer powder which is a short fibrous particle whose aspect ratio that is the ratio of the length in the longitudinal direction to the fiber diameter is 10 times or more and 500 times or less and contains the fiber portion having an average diameter of 2 µm or less. In Examples 1 to 4, the content of a substantially unfiberized lump portion contained in the liquid crystal polymer powder is 20% or less.

For this reason, the liquid crystal polymer films according to Examples 1 to 4 each had a small amount of warpage of 8 mm or less. Thus, the liquid crystal polymer film according to Examples 1 to 4 can be suitably used as a circuit board.

On the other hand, the finely ground liquid crystal polymer as a raw material for the post-step in Comparative Example 1 has the aspect ratio of 1.3, which is less than 10 times. In the liquid crystal polymer powder as a raw material for the post-step in Comparative Example 2, the average diameter of the fiber portions was 5 µm and more than 2 µm. The length of the fiber portion in the longitudinal direction was too long to measure the aspect ratio.

Thus, in Comparative Example 1, the liquid crystal polymer film warped so as to curl, and the amount of warpage could not be measured. The liquid crystal polymer film according to Comparative Example 2 has a large amount of warpage of 20 mm, and is not suitable for use as a circuit board.

The liquid crystal polymer powder used in production of the liquid crystal polymer film according to Examples 1 to 4 can further contain a liquid crystal polymer having a melting point higher than 330°C. For example, in the liquid crystal polymer film according to Examples 3 and 4, the liquid crystal polymer molded product and the liquid crystal polymer powder as raw materials used in production have a melting point of 350°C. Thus, the liquid crystal polymer film according to Examples 3 and 4 also had a melting point of 350°C, and the melting point was higher than 330°C, so that the solder heat resistance temperature was 330°C. In the liquid crystal polymer film according to Examples 3 and 4, the solder heat resistance temperature was significantly improved as compared with the respective solder heat resistance temperatures of 250°C and 280°C of the liquid crystal polymer films according to Comparative Examples 1 and 2.

In Examples 1 to 4, the liquid crystal polymer powder in the ultrafine short fiber form as described above was used as a raw material for the post-step. For this reason, in each of the liquid crystal polymer films according to Examples 1 to 4, the number of times of MIT folding endurance is 100 times or more, and the folding endurance is improved. Thus, it was confirmed that these liquid crystal polymer films had sufficient flexibility as a substrate of a flexible substrate and a diaphragm.

On the other hand, the liquid crystal polymer film according to Comparative Example 1 was very brittle, and cracking occurred in the liquid crystal polymer film when etching was performed to collect the test film. For this reason, the test film could not be collected from the liquid crystal polymer film according to Comparative Example 1, and the MIT folding endurance fatigue test could not be performed. In the liquid crystal polymer according to Comparative Example 2, the number of times of MIT folding endurance was 10 times, which was much lower than 100 times.

In the description of the above embodiment, combinable configurations may be combined with each other.

The embodiments and working examples disclosed herein are all to be considered by way of example in all respects, but not limiting. The scope of the present invention is specified by the claims, but not the above description, and intended to encompass all modifications within the spirit and scope equivalent to the claims.

## Claims

1. A liquid crystal polymer film comprising:
a liquid crystal polymer; and,
as a raw material, a liquid crystal polymer molded product whose endothermic peak temperature exceeds 330°C when heated to 400°C in an inert atmosphere, then cooled to normal temperature at a temperature decreasing rate of 40°C/min or more, and measured using a differential scanning calorimeter while being heated again at a temperature increasing rate of 40°C/min.

2. A liquid crystal polymer film containing a liquid crystal polymer, the liquid crystal polymer film comprising:
a pair of surface layers located on each of a surface on one side and a surface on the other side in a thickness direction; and
an inner layer located between the pair of surface layers, wherein
a main alignment direction of a molecule constituting the liquid crystal polymer contained in the pair of surface layers extends along a main alignment direction of the molecule constituting the liquid crystal polymer contained in the inner layer.

3. The liquid crystal polymer film according to claim 1 or 2, wherein when a test film having a width of 10 mm and a thickness of 25 µm and collected from the liquid crystal polymer film is subjected to an MIT folding endurance fatigue test under conditions of a load of 500 g, a curvature radius of 0.2 mm, a bending angle of 135 degrees, and a speed of 175 cpm, a number of times of bending required for cutting the test film is 100 times or more.

4. The liquid crystal polymer film according to any one of claims 1 to 3, wherein a water absorption rate is 0.2% by mass or less when the liquid crystal polymer film is immersed in water at normal temperature for 24 hours.

5. A method of producing a liquid crystal polymer film, comprising:
a dispersion step of dispersing, in a dispersion medium, a liquid crystal polymer powder which is a short fibrous particle whose aspect ratio that is a ratio of a length in a longitudinal direction to a fiber diameter is 10 times or more and 500 times or less and contains a fiber portion having an average diameter of 2 µm or less to form a paste or a slurry;
a matting step of drying the liquid crystal polymer powder in a paste form or a slurry form to form a liquid crystal polymer fiber mat; and
a heat-pressing step of heat-pressing the liquid crystal polymer fiber mat to obtain a liquid crystal polymer film.

6. The method of producing a liquid crystal polymer film according to claim 5, wherein the liquid crystal polymer powder contains a substantially unfiberized lump portion in a content of 20% or less.

7. The method of producing a liquid crystal polymer film according to claim 5 or 6, further comprising:
a finely grinding step of grinding a liquid crystal polymer in a state of being dispersed in liquid nitrogen to obtain a finely ground liquid crystal polymer in a granular form; and
a fiberizing step of crushing the finely ground liquid crystal polymer by a wet high-pressure crushing device to obtain the liquid crystal polymer powder.

8. The method of producing a liquid crystal polymer film according to claim 7, further comprising a coarsely grinding step of coarsely grinding a liquid crystal polymer molded product having a melting point higher than 330°C as the liquid crystal polymer to obtain a coarsely ground liquid crystal polymer.

9. The method of producing a liquid crystal polymer film according to any one of claims 5 to 8, wherein in the heat-pressing step, the liquid crystal polymer fiber mat is heat-pressed together with a copper foil.

10. The method of producing a liquid crystal polymer film according to claim 9, wherein the matting step includes an application step of applying the liquid crystal polymer powder in the slurry form to the copper foil.

11. The method of producing a liquid crystal polymer film according to any one of claims 5 to 10, wherein in the matting step, the liquid crystal polymer powder in the slurry form is molded into the liquid crystal polymer fiber mat by a papermaking method.
